# EUROPÄISCHE PATENTSCHRIFT

(11) **EP 0 413 998 B1**
(45) Veröffentlichungstag und Bekanntmachung des Hinweises auf die Patenterteilung: **27.10.1993**
(21) Anmeldenummer: 90114641.5
(22) Anmeldetag: 31.07.1990
(51) Int. Cl.: F01N 3/28

(54) **Abgasreinigungsvorrichtung**
Device for the purification of exhaust gases
Dispositif de purification de gaz d'échappement

(30) Priorität: 24.08.1989 DE 3927895
(43) Veröffentlichungstag der Anmeldung: 27.02.1991
(73) Patentinhaber: Leistritz Aktiengesellschaft, D-90459 Nürnberg (DE)
(72) Erfinder: Stoepler, Walter, Dr., D-8522 Herzogenaurach (DE); Wolf, Roland, D-8584 Kemnath (DE); Dörner, Reinhold, D-8487 Pressath (DE); Scharnagel, Alfred, D-8481 Trabitz (DE); Klimowitsch, Josef, D-8487 Pressath (DE)
(74) Vertreter: Matschkur, Götz, Lindner Patent- und Rechtsanwälte

(56) Entgegenhaltungen:
- EP-A- 0 219 636
- DE-A- 2 222 663
- DE-A- 2 319 663

## Beschreibung

Die Erfindung bezieht sich auf eine Abgasreinigungsvorrichtung mit einem zweischaligen Außengehäuse, in welchem über eine elastische Mineralfasermatte, insbesondere eine sogenannte Quellmatte, wenigstens ein wabenförmig strukturirter Trägerkörper sowie ein- und ausgangsseitige innere Abschirmtrichter sowie Abstandsringe zwischen aufeinanderfolgenden Trägerkörpern gelagert sind.

Ein erhebliches Problem bei der Herstellung solcher Abgasreinigungsvorrichtungen (man vergl. hierzu beispielsweise EP-A-0 219 636) bereitet das Einbringen der inneren Teile, d.h. also der gasführenden Innentrichter und ggf. Abstandsringe zwischen mehreren Trägerkörpern in das Gehäuse derart, daß die inneren Bauteile einerseits vollständig durch die elastische Mineralfasermatte umhüllt sind und andererseits auch keine Falten entstehen oder Überlappungen auftreten, da an diesen Stellen während der Montage bzw. im Betrieb durch die Ausdehnung der Quellmatte bei Erhitzung zu große örtliche Spannungsspitzen auftreten könnten, die zu einer Zerstörung der Trägerkörper oder der Auskleidungstrichter führen. Berücksichtigt man dabei zusätzlich noch, daß die ja notwendigerweise an bestimmte Gegebenheiten der Bodenplatte, vorbeiführende Rohre, Kardanwellen od.dgl., anzupassenden Abgasreinigungsvorrichtungen relativ komplizierte Querschnitte der Trägerkörper erforderlich machen und auf der anderen Seite bei doppelflutigen Anlagen durch die eingezogene Form die Umhüllung mit der Lagermatte noch zusätzlich erschwert wird, so ergeben sich insgesamt doch erhebliche Montageprobleme, die in jedem Fall auch die Ausschußrate beträchtlich erhöhen.

Aus der Deutschen Offenlegungsschrift DE-A-2 319 663 ist es darüber hinaus bekannt, den Monolithen mit der Lagermatte und/oder dem Außengehäuse zusätzlich zu verkleben. Das Verkleben der Lagermatte, die genau die gleichen Längsabmessungen aufweist wie der Monolith, bringt aber montagetechnisch überhaupt keine Vorteile, wobei dies erst recht nicht für eine etwaige Verklebung zwischen der Lagermatte und dem Außengehäuse gilt. Das Problem einer exakten Fixierung mehrerer Einzelteile zueinander, wobei die Anordnung der Teile zueinander auch durch das Umhüllen mit der Lagermatte nicht verändert werden soll, ist überhaupt nicht Gegenstand dieser Druckschrift, in der ja als einziges Innenteil ein wabenförmiger Trägerkörper vorhanden ist. Entsprechend das gleiche gilt für die Anordnung nach der Deutschen Offenlegungsschrift DE-A-2 222 663. Auch dort sind weder Innentrichter noch Abstandsringe zwischen aufeinanderfolgenden Trägerkörpern vorhanden, so daß sich das komplizierte Problem der Zuordnung dieser Teile bei der Montage überhaupt nicht stellt. Der Monolith seinerseits ist mit einem Schutzmantel umgeben, der verhindert, daß äußere Spannungsspitzen auf den Monolithen durchschlagen und diesen beschädigen. Die eigentliche Lagermatte ist lose um den Schutzmantel herumgelegt.

Der Erfindung liegt daher die Aufgabe zugrunde, eine Abgasreinigungsvorrichtung der eingangs genannten Art so auszugestalten, daß eine exakte fehlerfreie Montage der Innenbauteile und der sie umhüllenden Mineralfasermatte im Gehäuse erreicht wird.

Zur Lösung dieser Aufgabe ist erfindungsgemäß vorgesehen, daß die Innenteile durch die mit einer wieder lösbaren Kleberschicht auf der Innenseite versehene Mineralfasermatte zu einer Baueinheit zusammengefaßt sind.

Durch die erfindungsgemäße Anordnung einer wieder lösbaren Kleberschicht auf der Innenseite der Mineralfasermatte kann diese unter Zusammenhalten der von ihr umhüllten Innenteile sauber um diese Teile herumgezogen werden und dabei infolge der Wiederlösbarkeit der Kleberschicht auch bei Bedarf die Matte wieder etwas abgezogen, nachgespannt oder gelockert werden, um einerseits die Bildung von Falten zu vermeiden und andererseits eine exakte Umhüllung zu erreichen, so daß die Kanten des Lagermatten-Zuschnitts exakt aneinanderstoßen und somit weder ein Spalt entsteht, durch den Gase unbehindert und ohne Durchsetzung des Trägerkörpers sozusagen im Bypass neben vorbei passieren können, noch gefürchteten Überlappungen und damit verbundene Spannungsspitzen zu befürchten sind. Ein erheblicher Vorteil bei der Montage liegt dabei in der Tatsache, daß die Umhüllung abschnittsweise erfolgen kann, so daß nicht wie bisher nach dem Umschlagen der Matte beim Ausrichten andere Stellen wieder auseinanderklaffen können und somit ständig nachkorrigiert werden muß.

In Ausgestaltung der Erfindung kann dabei vorgesehen sein, daß die Mineralfasermatte mit einer die Kleberschicht tragenden Gewebeschicht kaschiert ist. Eine derartige Gewebeschicht hat den Vorteil, daß das Aufbringen der Kleberschicht einfacher ist als dies der Fall ist, wenn man den Kleber unmittelbar auf die weiche saugfähige Quellmatte aufbringt. Die benötigte Klebermenge - hierfür eignet sich beispielsweise ein Acryl-Latex-Dispersionskleber - ist somit geringer.

Vorteilhaft bezüglich Klebermenge und Herstellung ist die Verwendung von doppelseitigen Klebefolien (Klebebändern), die unmittelbar vor dem Stanzen der Keramikfasermatten-Zuschnitte beim Abwickeln der Mattenrollen mit den Matten verklebt werden können.

Neben der Möglichkeit, die Kleberschicht von einer Abziehfolie aus Papier, Kunststoff od. dgl. zu überdecken, so daß die fertigen Zuschnitte beliebig zur Verarbeitungsstation transportiert werden können, da die Abziehfolie ja erst unmittelbar vor dem Umhüllen der Innenteile einer Abgasreinigungsvorrichtung abgezogen wird, hat es sich auch als sehr zweckmäßige Alternative erwiesen, die fertigen Zuschnitte der Mineralfasermatte im Zuge der Montagestraße mit einer Kleberschicht zu versehen, die Kleberschicht in einer vorzugsweise als Infrarot-Heizeinrichtung ausgebildeten Heizzone anzutrocknen und den Zuschnitt unmittelbar danach in die Verarbeitungsstation einzubringen, um die darauf aufgelegten Innenteile durch Umschlagen des Zuschnitts zur einfach verarbeitbaren und problemlos in das Außengehäuse einlegbaren Baueinheit zusammenzufassen.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: einen Längsschnitt durch eine erfindungsgemäße Abgasreinigungsvorrichtung,
- Fig. 2: einen Querschnitt längs der Linie II - II in Fig. 1,
- Fig. 3: einen vergrößerten Teilquerschnitt durch eine erfindungsgemäß ausgestaltete elastische Mineralfasermatte und
- Fig. 4: den Zuschnitt der Mineralfasermatte zur Umhüllung der Innenbauteile der Abgasreinigungsvorrichtung nach den Fig. 1 und 2.

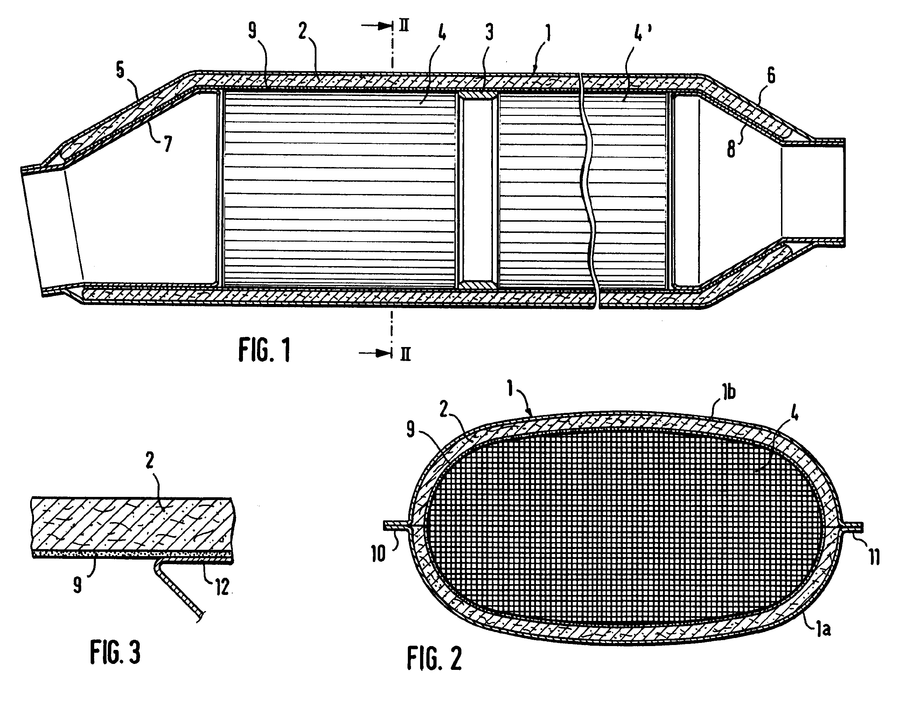

Die Fig. 1 und 2 zeigen eine Abgasreinigungsvorrichtung, in deren aus zwei Halbschalen 1a und 1b bestehendes Außengehäuse 1 die Innenbauteile unter Zwischenordnung einer sich über die gesamte Länge erstreckenden durchgehenden Mineralfasermatte 2, vorzugsweise einer sogenannten Quellmatte, gelagert sind. Die inneren Bauteile umfassen dabei im dargestellten Ausführungsbeispiel zwei hintereinander liegende, durch einen vorzugsweise keramischen Abstandsring 3 getrennte wabenförmig strukturierte Trägerkörper 4 u. 4′, die üblicherweise mit einer katalytisch wirksamen Beschichtung versehen sind, sowie jeweils die konischen Abgaszuführstutzen 5 und Abgasabführstutzen 6 in Abstand überdeckende innere Abschirmtrichter 7 u. 8.

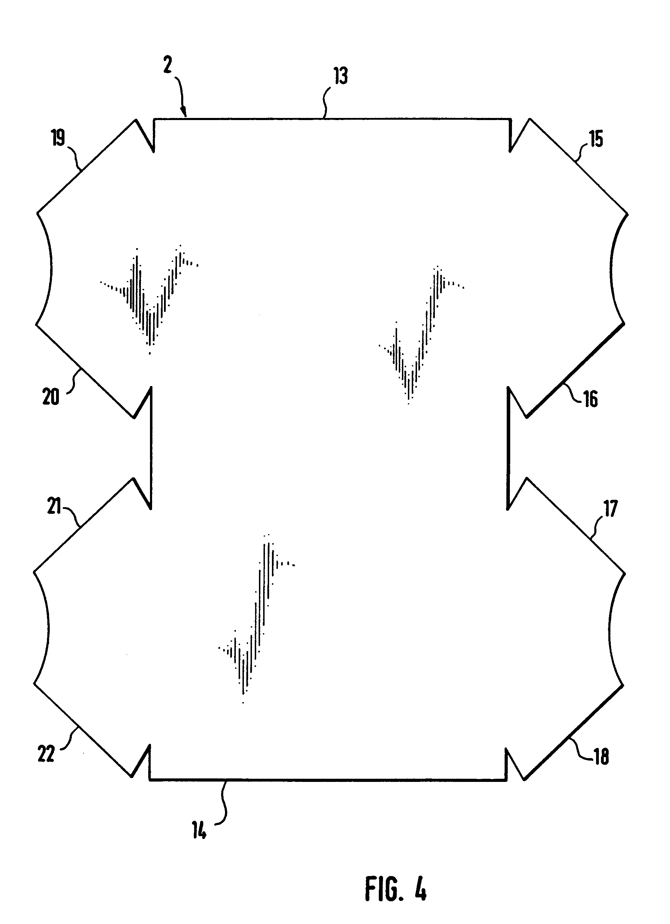

Zur einfacheren Montage ist die Mineralfasermatte 2 auf ihrer Innenseite mit einer wieder lösbaren Kleberschicht 9 versehen, so daß mit dem Umhüllen der Innenbauteile 3, 4, 7 u. 8 durch die Mineralfasermatte diese Innenbauteile auch zu einer Baueinheit zusammengefaßt werden, welche sehr viel einfacher weiter verarbeitet werden kann, da sie beim Einlegen in die untere Halbschale 1a des Außengehäuses und dem Auflegen der oberen Halbschale 1b bis zum Verschweißen der Ränder 10 u. 11 in der Montageposition zusammengehalten werden und auch ein Aufklaffen der Mineralfasermatte, bei der möglicherweise ein durchgehender Spalt entstehen könnte, durch welchen das Abgas an den katalytisch beschichteten Trägerkörpern vorbeigeleitet werden könnte, vermieden wird. In Fig. 3 erkennt man eine Ausführungsform einer Mineralfasermatte, bei der die Kleberschicht 9, beispielsweise eine Schicht aus einem Acryl-Latex-Dispersions-kleber, von einer abziehbaren Schutzfolie 12 überdeckt ist, die erst unmittelbar vor dem Umhüllen der Innenbauteile der Abgasreinigungsvorrichtung abgezogen wird. Auf diese Weise können die Zuschnitte der Mineralfasermatte, wie sie in Fig. 4 dargestellt sind, an beliebiger Stelle und zu beliebigen Zeiten vor der eigentlichen Endmontage bereits vorbereitet werden. Die Kanten 13 bzw. 14, 16 bzw. 17, 15 bzw. 18, 19 bzw. 22 und 20 bzw. 21 des in Fig. 4 gezeigten Zuschnitts lassen sich durch die wieder lösbare Kleberschicht 9 problemlos exakt auf Stoß aneinanderdrücken und behalten diese Montageposition auch im Einbauzustand dauerhaft bei.

## Patentansprüche

1. Abgasreinigungsvorrichtung mit einem zweischaligen Außengehäuse (1), in welchem über eine elastische Mineralfasermatte (2), insbesondere eine sogenannte Quellmatte, wenigstens ein wabenförmig strukturierter Trägerkörper (4, 4')sowie ein- und ausgangsseitige innere Abschirmtrichter (7, 8) sowie Abstandsringe (3) zwischen aufeinanderfolgenden Trägerkörpern (4, 4') gelagert sind, dadurch gekennzeichnet, daß die Innenteile (3, 4, 4', 7, 8) durch die mit einer wieder lösbaren Kleberschicht (9) auf der Innenseite versehene Mineralfasermatte (2) zu einer Baueinheit zusammengefaßt sind.

2. Abgasreinigungsvorrichtung nach Anspruch 1, dadurch gekennzeichnet, daß die Kanten (13, 14) des Zuschnitts der Mineralfasermatte an der Stoßkante spaltfrei aneinander angedrückt sind.

3. Abgasreinigungsvorrichtung nach Anspruch 1 oder 2, dadurch gekennzeichnet, daß die Mineralfasermatte (2) mit einer die Kleberschicht (9) tragenden Gewebeschicht kaschiert ist.

4. Verfahren zur Herstellung einer Abgasreinigungsvorrichtung nach einem der Ansprüche 1 bis 3, dadurch gekennzeichnet, daß die fertigen Zuschnitte der Mineralfasermatte mit einer Kleberschicht versehen werden, daß die Kleberschicht in einer Heizzone angetrocknet und der Zuschnitt unmittelbar danach in die Verarbeitungsstation eingebracht wird, in der die Innenteile aufgelegt und durch Umhüllen zur inneren Baueinheit zusammengefaßt werden.

5. Verfahren zur Herstellung einer Abgasreinigungsvorrichtung nach einem der Ansprüche 1 bis 3, dadurch gekennzeichnet, daß zur Aufbringung einer wiederlösbaren Kleberschicht auf die Mineralfasermatten die Mineralfasermatten vor dem Stanzen der Mattenzuschnitte mit doppelseitigen Klebefolien oder dünnen doppelseitigen Klebegeweben kaschiert werden, daß die Mattenzuschnitte ausgestanzt werden und daß nach dem Stanzen der Mattenzuschnitt in die Verarbeitungsstation eingebracht wird, in der die Innenteile aufgelegt und durch Umhüllen zur inneren Baueinheit zusammengefaßt werden.

6. Verfahren nach Anspruch 5, dadurch gekennzeichnet, daß die der Mineralfasermatte abgelegene Kleberschicht (9) von einer Abziehfolie (12) aus Papier oder Kunststoff überdeckt ist, die erst unmittelbar vor dem Auflegen der Innenteile abgezogen wird.

## Claims

1. Device for cleaning exhaust gas, having an outer housing (1) formed of two shells in which via a resilient mineral fibre matting (2), in particular what is known as an expanding matting, at least one honeycomb-structured carrier body (4, 4') and inlet- and outlet-side inner screening funnels (7, 8), as well as spacer rings (3) are mounted between consecutive carrier bodies (4, 4'), characterised in that the inner parts (3, 4, 4', 7, 8) are assembled into one modular unit by the mineral fibre matting (2) provided with a detachable cement layer (9) on the inside.

2. Device for cleaning exhaust gas according to claim 1, characterised in that the edges (13, 14) of the blank of the mineral fibre matting are pressed against one another without a gap at the abutting edge.

3. Device for cleaning exhaust gas according to claim 1 or 2, characterised in that the mineral fibre matting (2) is backed with a fabric layer carrying the cement layer (9).

4. Process for manufacturing a device for cleaning exhaust gas according to one of claims 1 to 3, characterised in that the finished blanks of the mineral fibre matting are provided with a cement layer, in that the cement layer is dried in a heating zone, and the blank is then immediately introduced into a processing bay in which the inner parts are applied and incorporated into the inner modular unit by being enclosed .

5. Process for manufacturing a device for cleaning exhaust gas according to one of claims 1 to 3, characterised in that, in order to apply a detachable cement layer to the mineral fibre mattings, the mineral fibre mattings are backed with double-sided bonding sheets or thin double-sided adhesive fabrics before punching of the matting blanks, in that the matting blanks are punched out, and in that after punching the matting blank is introduced to the processing bay in which the inner parts are applied and incorporated into the inner modular unit by being enclosed.

6. Process according to claim 5, characterised in that the cement layer (9) laid over the mineral fibre matting is covered by a covering sheet (12) of paper or plastics material, which is not removed until immediately before application of the inner parts.

## Revendications

1. Dispositif de purification de gaz d'échappement comportant un carter extérieur (1) composé de deux coques, dans lequel sont montés, par l'intermédiaire d'un matelas de fibres minérales élastiques (2), notamment un matelas dit d'expansion, au moins un corps formant substrat (4, 4') à structure en nid d'abeilles, ainsi que des cônes de protection intérieurs (7, 8) d'entrée et de sortie, et des bagues entretoises (3) entre les corps formant substrat (4, 4') successifs, caractérisé en ce que les pièces intérieures (3, 4, 4', 7, 8) sont regroupées en un module de construction, par le matelas de fibres minérales (2) pourvu sur son côté intérieur d'une couche d'adhésif (9) permettant un décollage.

2. Dispositif de purification de gaz d'échappement selon la revendication 1, caractérisé en ce que les bords (13, 14) du flan découpé du matelas de fibres minérales, sont appliqués l'un contre l'autre sans interstice résiduel au niveau du joint de jonction.

3. Dispositif de purification de gaz d'échappement selon la revendication 1 ou 2, caractérisé en ce que le matelas de fibres minérales (2) est doublé d'une couche de tissu portant la couche d'adhésif (9).

4. Procédé de fabrication d'un dispositif de purification de gaz d'échappement selon l'une des revendications 1 à 3, caractérisé en ce que les flans découpés finis du matelas de fibres minérales, sont pourvus d'une couche d'adhésif, en ce que le séchage de la couche d'adhésif est amorcé dans une zone de chauffage, et le flan découpé est ensuite directement amené dans le poste de transformation, dans lequel les pièces intérieures sont déposées et, par enveloppement, sont regroupées pour former le module de construction intérieur.

5. Procédé de fabrication d'un dispositif de purification de gaz d'échappement selon l'une des revendications 1 à 3, caractérisé en ce que pour l'application sur les matelas de fibres minérales, d'une couche d'adhésif permettant le décollage, les matelas de fibres minérales sont doublés, avant le découpage des flans de matelas, de films adhésifs double face ou de minces tissus adhésifs double face, en ce que les flans de matelas sont découpés, et en ce qu'après le découpage, le flan de matelas découpé est amené dans le poste de transformation dans lequel les pièces intérieures sont déposées et, par enveloppement, sont regroupées pour former le module de construction intérieur.

6. Procédé selon la revendication 5, caractérisé en ce que la couche d'adhésif (9) déposée sur le matelas de fibres minérales est recouverte d'un film pelliculable (12) en papier ou matière plastique, qui n'est retiré que juste avant la mise en place des pièces intérieures.
